(19) Europäisches Patentamt
European Patent Office
Office européen des brevets

(11) **EP 0 737 718 B1**

(12) **EUROPÄISCHE PATENTSCHRIFT**

(45) Veröffentlichungstag und Bekanntmachung des Hinweises auf die Patenterteilung:
**12.06.2002 Patentblatt 2002/24**

(51) Int Cl.⁷: **C08L 75/04**

(21) Anmeldenummer: **96104913.7**

(22) Anmeldetag: **28.03.1996**

(54) **Herstellung von TPU-Copolymerisat-Mischungen mit Hilfe von Fliessverbesserern**

Preparation of TPU-copolymer-mixtures using flow improvers

Préparation de mélanges de copolymère et polyuréthane thermoplastiques à l'aide d'agents améliorant l'écoulement

(84) Benannte Vertragsstaaten:
**AT BE CH DE ES FR GB IT LI NL**

(30) Priorität: **10.04.1995 DE 19513501**

(43) Veröffentlichungstag der Anmeldung:
**16.10.1996 Patentblatt 1996/42**

(73) Patentinhaber: **BAYER AG**
**51368 Leverkusen (DE)**

(72) Erfinder:
• **Müller, Friedemann, Dr.**
  **41470 Neuss (DE)**
• **Bräuer, Wolfgang, Dr.**
  **51375 Leverkusen (DE)**

• **Hoppe, Hans-Georg**
  **42799 Leichlingen (DE)**
• **Wussow, Hans-Georg, Dr.**
  **40597 Düsseldorf (DE)**
• **Heidingsfeld, Herbert**
  **50226 Frechen (DE)**
• **Meister, Willi, Dr.**
  **41539 Dormagen (DE)**
• **Schulte, Bernhard, Dr.**
  **47803 Krefeld (DE)**
• **Winkler, Jürgen**
  **40764 Langenfeld (DE)**

(56) Entgegenhaltungen:
**EP-A- 0 417 581        GB-A- 2 021 600**

**Beschreibung**

Die Erfindung betrifft die Herstellung von thermoplastischen Polymergemischen, durch Umsetzung Polyurethan bildender Komponenten in Gegenwart eines vorgefertigten und mit einem Fließverbesserer vorgemischten Copolymerisats in einem Extruder.

Thermoplastische Polyurethan-Elastomere (TPU) sind seit langem bekannt. Sie sind von technischer Bedeutung wegen ihrer guten mechanischen Eigenschaften und ihrer thermoplastischen Verarbeitbarkeit. Durch geeignete Wahl der Komponenten können die mechanischen Eigenschaften in weiten Grenzen verändert werden. Eine Übersicht über TPU, ihre Eigenschaften und Anwendungen wird z.B. in Kunststoffe 68 (1978), Seiten 819 bis 825 und in Kautschuk, Gummi, Kunststoffe 35 (1982), Seiten 568 bis 584 gegeben.

TPU werden aus linearen Polyolen, meist Polyester oder Polyether-Diolen, organischen Diisocyanaten und kurzkettigen Diolen (Kettenverlängerer) aufgebaut. Bei der Reaktion können Katalysatoren zur Beschleunigung der Reaktion der Komponenten zugesetzt werden.

Zur Einstellung der Eigenschaften können auch die relativen Mengen der Komponenten in breiten molaren Verhältnissen variiert werden. Bewährt haben sich molare Verhältnisse von Polyolen zu Kettenverlängerern von 1:1 bis 1:12. Hierdurch ergeben sich Produkte mit Härten von 80 Shore A bis 75 Shore D.

Die TPU können entweder schrittweise (Prepolymerverfahren) oder durch gleichzeitige Reaktion aller Komponenten in einer Stufe hergestellt werden (one shot). Beim Prepolymerverfahren wird aus dem Polyol und dem Diisocyanat zuerst ein isocyanathaltiges Prepolymer gebildet, das dann mit dem Kettenverlängerer umgesetzt wird.

Die TPU können kontinuierlich oder diskontinuierlich hergestellt werden. Die bekanntesten technischen Herstellverfahren sind das "Bandverfahren" und das "Extruderverfahren".

Durch Mischungen mit Polymerisaten können die günstigen TPU-Eigenschaften mit denen dieser Polymerisate kombiniert werden. Insbesondere verbessert Zumischen von Pfropfkautschuken die Kälteeigenschaften der TPU. In der US-PS 4 317 890 ist eine TPU/ABS-Mischung beschrieben. Die erhaltenen Formmassen zeigen aber bei tiefen Temperaturen eine unbefriedigende Schlagzähigkeit und sind nicht frei von Segregationserscheinungen, dem sogenannten Perlmutteffekt. Der Einsatz von TPU's niedriger Dichte (EP-A 0 152 049) oder die Zugabe von Verarbeitungshilfsmitteln (Polyacrylate in US-PS 4 179 479, Styrol-MSA-Copolymerisate in EP-A 0 443 432) bringt keine entscheidende Verbesserung der Dispergierung, was sich insbesondere durch eine mäßige Kälteschlagzähigkeit bemerkbar macht.

Ein anderer Weg wird in der DE-OS 2 854 409 (US-PS 4 342 847) beschrieben. Die TPU/Polymerisat-Mischungen werden in einem Extruder-Reaktionsverfahren durch die Zudosierung aller TPU-Rohstoffe zu dem vorgefertigten und vorher im Extruder aufgeschmolzenen Polymerisat hergestellt. Die so hergestellten Mischungen zeigen zwar schon ein verbessertes aber noch unbefriedigendes Kälteverfahren. Weitere Nachteile sind die hohen Aufschmelztemperaturen und der steile Verlauf der Temperaturabhängigkeit der Schmelzviskosität bei der thermoplastischen Verarbeitung.

Bis heute ist es nicht gelungen, TPU/(Co)polymerisat-Mischungen mit guten mechanischen und elastischen Eigenschaften, insbesondere in der Kälte, und gleichzeitig mit gutem Aufschmelzverhalten zu erhalten.

Der Erfindung liegt die Erkenntnis zugrunde, daß dies eine optimale Dispergierung der beiden Thermoplasten voraussetzt, die durch eine Angleichung der Schmelzviskositäten beider Komponenten ermöglicht wird. Mit anderen Worten, die Schmelzviskosität des Copolymerisates muß erniedrigt werden.

Gegenstand der Erfindung ist ein Verfahren zur kontinuierlichen Herstellung einer TPU/(Co)polymerisat-Mischung, indem man

I) 1 bis 60 Gew.-%, bezogen auf die Gesamt-Mischung, eines thermoplastischen Copolymerisats, welches 1 bis 30 Gew.-%, bezogen auf das thermoplastische Copolymerisat, eines Fließverbesserers enthält, und

II) die polyurethanbildenden Komponenten

A) organisches Diisocyanat
B) lineares hydroxylterminiertes Polyol mit Molekulargewicht von 500 bis 5000
C) Diol- oder Diamin-Kettenverlängerer mit Molekulargewicht von 60 bis 500

einzeln oder gemischt über eine oder mehrere Einspeisungsstellen in einen Extruder einbringt, wobei das Molverhältnis der NCO-Gruppen in A) zu den OH-Gruppen in B) und C) 0,9 bis 1,2 ist, und nach Abschluß der Polyurethanbildung die TPU/Polymerisatmischung aus dem Extruder austrägt.

Die erfindungsgemäßen TPU/Copolymerisat-Mischungen enthalten somit thermoplastisch verarbeitbare Polyurethane, die aus den organischen Diisocyanaten A), Polyolen B) und Kettenverlängerungsmitteln C) aufgebaut sind.

Als organische Diisocyanate kommen beispielsweise aliphatische, cycloaliphatische, araliphatische, heterocyclische und aromatische Diisocyanate in Betracht, wie sie z.B. in Justus Liebigs Annalen der Chemie, 562, Seiten 75 bis 136, beschrieben werden.

Im einzelnen seien beispielhaft genannt: aliphatische Diisocyanate, wie Hexamethylendiisocyanat, cycloaliphatische Diisocyanate, wie Isophorondiisocyanat, 1,4-Cyclo-hexandiisocyanat, 1-Methyl-2,4- und -2,6-cyclohexandiisocyanat sowie die entsprechenden Isomerengemische, 4,4'-, 2,4'- und 2,2'-Dicyclohexylmethandiisocyanat sowie die entsprechenden Isomerengemische und aromatische Diisocyanate, wie 2,4-Toluylendiisocyanat, Gemische aus 2,4- und 2,6-Toluylendiisocyanat, 4,4', 2,4'- und 2,2'-Diphenylmethandiisocyanat, Gemische aus 2,4'- und 4,4'-Diphenylmethandiisocyanat, urethanmodifizierte flüssige 4,4'- und/oder 2,4'-Diphenylmethandiisocyanate, 4,4'-Diisocyanatodiphenylethan-(1,2) und 1,5-Naphthylendiisocyanat. Vorzugsweise verwendet werden 1,6-Hexamethylendiisocyanat, Isophorondiisocyanat, Dicyclohexylmethandiisocyanat, Diphenylmethandiisocyanat-Isomerengemische mit einem 4,4'-Diphenylmethandiisocyanatgehalt von größer als 96 Gew.-% und insbesondere 4,4'-Diphenylmethandiisocyanat und 1,5-Naphthylendiisocyanat.

Die genannten Diisocyanate können zusammen mit bis zu 15 Gew.-% (berechnet auf Diisocyanat), aber höchstens soviel eines Polyisocyanates, daß ein unvernetztes Produkt entsteht, verwendet werden. Beispiele sind Triphenylmethan-4,4',4"-triisocyanat und Polyphenyl-polymethylen-polyisocyanate.

Als Komponente B) werden lineare hydroxylterminierte Polyole mit einem mittleren Molekulargewicht $\overline{M}_n$ von 500 bis 5000 verwendet. Diese enthalten produktionsbedingt oft kleinere Mengen an verzweigten Produkten. Deshalb werden sie häufig als "im wesentlichen lineare" Polyole bzeichnet.

Bevorzugte Polyole B) sind Polyester-, Polyether-, Polycarbonat-Diole oder Gemische aus diesen.

Geeignete Polyether-Diole können dadurch hergestellt werden, daß man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2- und 2,3-Butylenoxid. Vorzugsweise Anwendung finden Ethylenoxid, Propylenoxid und Mischungen aus 1,2-Propylenoxid und Ethylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyldiethanolamin und Diole, wie Ethylenglykol, 1,3-Propylenglykol, Butandiol-1,4 und Hexandiol-1,6. Gegebenenfalls können auch Mischungen von Startermolekülen eingesetzt werden. Geeignete Polyether-Diole sind ferner die hydroxylgruppenhaltigen Polymerisationsprodukte des Tetrahydrofurans. Die Polyether-Diole können sowohl einzeln als auch in Form von Mischungen untereinander zur Anwendung kommen.

Es können auch trifunktionelle Polyether in Anteilen von 0 bis 30 Gew.-%, bezogen auf die bifunktionellen Polyether, eingesetzt werden.

Geeignete Polyester-Diole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung verwendet werden. Zur Herstellung der Polyester-Diole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, Butandiol-1,4, Pentandiol-1,5, Hexandiol-1,6, Decandiol-1,10, 2,2-Dimethylpropandiol-1,3, Propandiol-1,3 und Dipropylenglykol. Je nach den gewünschten Eigenschaften können die mehrwertigen Alkohole allein oder gegebenenfalls in Mischung untereinander verwendet werden.

Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von ω-Hydroxycarbonsäuren, beispielsweise ω-Hydroxycapronsäure und vorzugsweise Polymerisationsprodukte von Lactonen, beispielsweise gegebenenfalls substituierten ω-Caprolactonen.

Als Polyester-Diole vorzugsweise verwendet werden Ethandiol-polyadipate, 1,4-Butandiol-polyadipate, Ethandiol-1,4-butandiol-polyadipate, 1,6-Hexandiol-neopentylglykol-polyadipate, 1,6-Hexandiol-1,4-butandiol-polyadipate und Polycaprolactone.

Die Polyester-Diole besitzen mittlere Molekulargewichte $\overline{M}_n$ von 500 bis 5000.

Als Kettenverlängerungsmittel C) mit Molekulargewichten von 60 bis 500 kommen vorzugsweise aliphatische Diole mit 2 bis 14 Kohlenstoffatomen, wie z.B. Ethandiol, Hexandiol-1,6, Diethylenglykol, Dipropylenglykol und insbesondere Butandiol-1,4 in Betracht. Geeignet sind jedoch auch Diester der Terephthalsäure mit Glykolen mit 2 bis 4 Kohlenstoffatomen, wie z.B. Terephthalsäure-bis-ethylenglykol oder -butandiol-1,4, Hydroxyalkylenether des Hydrochinons, wie z.B. 1,4-Di(β-hydroxyethyl)-hydrochinon, (cyclo)aliphatische Diamine, wie z.B. Isophoron-diamin, Ethylendiamin, 1,2-, 1,3-Propylen-diamin, N-Methyl-propylendiamin-1,3, N,N'-Dimethyl-ethylen-diamin und aromatische Diamine, wie z.B. 2,4- und 2,6-Toluylen-diamin, 3,5-Diethyl-2,4- und/oder -2,6-toluylen-diamin und primäre ortho-di-, tri- und/oder tetraalkylsubstituierte 4,4'-Diaminodiphenylmethane. Es können auch Gemische der oben genannten Kettenverlängerer eingesetzt werden.

Weiterhin können in geringen Mengen auch übliche monofunktionelle Verbindungen, z.B. als Kettenabbrecher oder Entformungshilfen, eingesetzt werden. Beispielhaft genannt seien Alkohole wie Octanol und Stearylalkohol oder Amine wie Butylamin und Stearylamin.

Zur Herstellung der TPU's können die Komponenten, gegebenenfalls in Gegenwart von Katalysatoren, Hilfsmitteln und/oder Zusatzstoffen in solchen Mengen zur Reaktion gebracht werden, daß das Äquivalentverhältnis von NCO-Gruppen zur Summe der NCO-reaktiven Gruppen, insbesondere der OH-Gruppen der niedermolekularen Diole/ Triole und Polyole 0,9:1,0 bis 1,2:1,0, vorzugsweise 0,95:1,0 bis 1,10:1,0 beträgt.

Geeignete Katalysatoren zur Beschleunigung der TPU-Bildung sind die hierfür bekannten und üblichen tertiären Amine, wie z.B. Triethylamin, Dimethylcyclohexylamin, N-Methylmorpholin, N,N'-Dimethyl-piperazin, 2-(Dimethylaminoethoxy)-ethanol, Diazabicyclo-(2,2,2)-octan und ähnliche sowie insbesondere organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Bevorzugte Katalysatoren sind organische Metallverbindungen, insbesondere Titansäureester, Eisen- und/oder Zinnverbindungen.

Neben Katalysatoren können den TPU-Komponenten auch Hilfsmittel und/oder Zusatzstoffe einverleibt werden. Genannt seien beispielsweise Gleitmittel, Antiblockmittel, Inhibitoren, Stabilisatoren gegen Hydrolyse, Licht, Hitze und Verfärbung, Flammschutzmittel, Farbstoffe, Pigmente, anorganische und/oder organische Füllstoffe und Verstärkungsmittel.

Verstärkungsmittel sind insbesondere faserartige Verstärkungsstoffe wie z.B. anorganische Fasern, die nach dem Stand der Technik hergestellt werden und auch mit einer Schlichte beaufschlagt sein können.

Nähere Angaben über die oben genannten Hilfs- und Zusatzstoffe sind in der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964 oder der DE-A 2 901 774 zu entnehmen.

Im erfindungsgemäßen Verfahren können verschiedene vorgefertigte (Co)polymerisate I) eingesetzt werden. In Frage kommen beispielsweise auch andere thermoplastische Polyurethane.

Erfindungsgemäß geeignete thermoplastische Copolymerisate sind auch die bekannten ABS-Kunststoffe. Hierbei handelt es sich um elastisch-thermoplastische Zweiphasen-Kunststoffe, welche im wesentlichen aus Acrylnitril (A), Butadien (B) und Styrol bzw. α-Methyl-styrol (S) aufgebaut sind. B kann ganz oder teilweise durch eine andere Kautschukkomponente ersetzt werden, z.B. durch ein EPDM-Kautschuk (sogenannte AES-Polymerisate) oder durch ein Acrylesterkautschuk. Diese Polymerisate enthalten eine kontinuierliche Phase an einem thermoplastischen Harz (z.B. Styrol/Acrylnitril-Copolymerisat, SAN) und eine diskontinuierliche Kautschukphase an kleinen Kautschukteilchen, die meist als Pfropfpolymerisat in Styrol und Acrylnitril auf dem Kautschuk vorliegen. Sie werden in an sich bekannter Weise durch Emulsions-, Suspensions-, Masse- und Lösungspolymerisation bzw. Kombinationen dieser Verfahren hergestellt (vgl. C.H. Basdekis in "ABS-Plastics", Reinhold Publishing Corporation, New York, 1964).

Ebenfalls geeignet sind Polyethylen und Polypropylen, Copolymere aus Ethylen und weiteren olefinisch ungesättigten Monomeren, Polybuten-(1), Polymethylpenten, Polystyrol (insbesondere schlagzähes Polystyrol), Polyvinylchlorid, Polymethacrylsäuremethylester, Polycarbonate, Polyamide, aromatische Polyether (z.B. Polyphenylenoxid), Polyester aus Terephthalsäure und gegebenenfalls Isophthalsäure sowie Butylenglykol und/oder Ethylenglykol, Polyether-Weichsegmente enthaltendes Polybutylenglykolterephthalat, Celluloseester (z.B. Celluloseacetat, -propionat und acetobutyrat), Styrol-Butadien-(Pfropf)-copolymerisate (gegebenenfalls in Abmischung mit weiteren Polymerisaten), sowie Polypropylen und Ethylen-Propylen-Copolymere in Abmischung mit EPM und/oder EPDM-Kautschuken, Ethylen/Vinylacetatcopolymere. Polymerisate dieser Art werden z.B. von Vieweg et. al. im Kunststoff-Handbuch, Bd. II-VII, IX u. XI, Carl-Hanser-Verlag München, 1963 bis 1992, und von Hansjürgen Sächtling im "Kunststofftaschenbuch", 21. Ausgabe, Carl-Hanser-Verlag, München-Wien, 1979, beschrieben.

Erfindungsgemäß bevorzugte ABS-Polymerisate sind Mischungen aus

a) 5 bis 70 Gew.-% eines oder mehrerer Pfropfprodukte und

b) 95 bis 30 Gew.-% eines oder mehrerer thermoplastischer Harze.

Pfropfprodukte a) sind bevorzugt Polymerisate, die durch Polymerisation von Pfropfmonomeren in Anwesenheit eines Kautschuks als Pfropfbasis erhalten werden. Der Kautschukanteil beträgt dabei ca. 5 bis 80 Gew.-% und wird durch das Polymerisationsverfahren mitbestimmt. Der Kautschuk liegt dabei in Form diskreter Teilchen vor, bildet aber eine diskontinuierliche Phase.

Als Pfropfbasis kommen insbesondere Polybutadien-, Butadien/Acrylnitril- und Butadien/Styrol-Polymerisate sowie Butadien-Styrol-Blockpolymerisate in Betracht. Pfropfmonomere sind hauptsächlich Styrol, Gemische aus Styrol und Acrylnitril, bevorzugt im Gewichtsverhältnis 90:10 bis 50:50, Gemisch aus Styrol und Methylmethacrylat, bevorzugt im Gewichtsverhältnis 5:95 bis 95:5, sowie Styrol-Acrylnitril-Methylmethacrylat-Gemische.

Das thermoplastische Harz b) bildet die kontinuierliche Phase (Matrix) und ist z.B. ein Polymerisat oder Copolymerisat von Styrol, α-Methylstyrol, Acrylnitril, Methylmethacrylat und Maleinsäureanhydrid. Bevorzugt sind Polystyrol, Styrol-Acrylnitril-Copolymerisat mit einem Acrylnitril-Gehalt von 20 bis 35 Gew.-% sowie α-Methylstyrol-Acrylnitril-Copolymere mit einem Acrylnitril-Gehalt von 21 bis 31 Gew.-%. Das Gewichtsmittel des Molekulargewichts dieser Harze ist meist 50.000 bis 550.000. Die molekulare Uneinheitlichkeit, ausgedrückt durch den Wert $(M_W/M_N)-1 = U_n$ ist 1,0 bis 3,5.

Gegebenenfalls kann erfindungsgemäß jedoch auch die Komponente a) allein als Thermoplast eingesetzt werden.

Das thermoplastische (Co)polymerisat I) und speziell ABS wird in einer Menge von 1 bis 60 Gew.-%, bevorzugt 3 bis 25 Gew.-%, bezogen auf TPU/Polymerisat-Mischung, angewandt.

Die Fließverbesserer, die in das (Co)polymerisat I) eingemischt werden, sind Produkte, die das Aufschmelz- und Fließverhalten des thermoplastischen (Co)polymerisates signifikant verbessern, d.h. den MVR-Wert (ISO 11 33) des (Co)polymerisates um mindestens 3 heraufsetzen.

Es können z.B. handelsübliche Gleitmittel, wie Stearylamide, Stearyladipate, Fettsäuren, Calciumstearat, Paraffine oder Fluorpolymere und handelsübliche Weichmacher wie Phthalate, Phosphate, Adipate, Trimellitsäureester, Dicarbonsäureester, Hydroxycarbonsäureester, Polyester, Polyether oder Alkylsulfonsäureester des Phenols sein. Additive dieser beiden Arten sind z.B. bei R. Gächter/H. Müller: (Hrsg) Taschenbuch der Kunststoff-Additive, 3. Ausgabe, Carl-Hanser-Verlag München, 1989, beschrieben. Desweiteren kommen Alkohole wie Ethylenglykol, Glycerin, Butan- und Hexandiole und Diisocyanate, wie Diphenylmethan-1,4-diisocyanat, in Betracht.

Als Fließverbesserer können also niedermolekulare Verbindungen, Oligomere und leichtfließende Polymere Verwendung finden.

Bevorzugt sind Polyole mit einem mittleren Molekulargewicht $\overline{M}_n$ von 500 bis 5000, insbesondere Polyester-Diole, die auch der Komponente B) der Polyurethanbildung zugehören. Besonders bevorzugt sind Polyester-Diole mit einem mittleren Molekulargewicht $\overline{M}_n$ von 800 bis 4000.

Der Fließverbesserer wird in einer Menge von 1 bis 30 Gew.-%, vorzugsweise 2 bis 20 Gew.-%, bezogen auf das thermoplastische Copolymerisat I) eingesetzt.

Das erfindungsgemäße Verfahren wird wie folgt ausgeführt:

Der Fließverbesserer wird in das thermoplastische Copolymerisat I) nach bekannten Methoden ansatzweise oder kontinuierlich eingemischt. Dazu kann z.B. ein Schnellmischer, ein Kneter oder ein Extruder verwendet werden. Es kann auch genügen, den Fließverbesserer auf das Copolymerisat I) aufzugeben.

In einer besonderen Ausführungsform der Erfindung wird der Fließverbesserer kontinuierlich mit dem Copolymerisat in einem Extruder (Seitenschnecke) vermischt und direkt in den Reaktions-Extruder, in dem das TPU erzeugt wird, zudosiert.

Man kann auch den ersten Teil des TPU-Reaküonsextruders zum Mischen benutzen.

Die TPU werden kontinuierlich im sogenannten Extruderverfahren, z.B. in einem Mehrwellenextruder, in Gegenwart der Copolymerisat-Fließverbesserer-Mischung hergestellt. Die TPU-Komponenten A), B) und C) können gleichzeitig ("one shot") oder nacheinander ("Prepolymer-Verfahren") zugefügt werden. Dabei kann das Prepolymer sowohl ansatzweise vorgelegt, als auch kontinuierlich in einem Teil des Reaktionsextruders oder in einem separaten vorgeschalteten Reaktor hergestellt werden.

Bevorzugt wird die Copolymerisat-Fließverbesserer-Mischung zusammen mit einem Teil oder mit der gesamten Menge einer der TPU-Komponenten A), B) oder C) in das erste Gehäuse des Extruders dosiert. Die jeweils fehlenden Komponenten werden dann einzeln oder vorgemischt in ein oder mehrere nachfolgende Extruder-Gehäuse gegeben.

Besonders bevorzugt wird das Copolymerisat mit einem Teil des Polyols B) als Fließverbesserer vorgemischt in das erste Gehäuse dosiert. Ebenfalls in das erste Gehäuse wird ein Teil oder die gesamte Menge an Diisocyanat A) oder ein Teil oder die gesamte Menge an Diol C) gegeben. Die jeweiligen Restmengen der TPU-Komponenten werden in ein oder mehrere nachfolgende Gehäuse dosiert.

Die so erhaltenen TPU/Copolymerisat-Mischungen lassen sich aufgrund ihres hervorragenden Aufschmelzverhaltens besonders leicht verarbeiten. Sie haben gute mechanische und elastische Eigenschaften und eine deutlich verbesserte Schlagzähigkeit bei hoher Steifigkeit, insbesondere in der Kälte. Damit finden sie vorzugsweise Verwendung zur Herstellung von stark belasteten Spritzgießartikeln, wie Automobil-Teilen und Skischuhen.

**Beispiele**

**Beispiel 1**

Vormischung ABS/Polyester-Diol:

34 Gew.-Teile eines handelsüblichen Emulsions-ABS aus 17 Gew.-% Acrylnitril, 53 Gew.-% Styrol und 30 Gew.-% Butadien werden mit 3,4 Gew.-Teilen eines Poly-butandiol-1,4-adipates mit einem mittleren Molekulargewicht von ca. 2250 in einem Zweiwellenkneter (ZSK 53 der Fa. Wemer/Pfleiderer) compoundiert.

Die Gehäusetemperaturen der 12 Gehäuse liegen bei 220°C, die Drehzahl der ZSK ist auf 300 U/min eingestellt. Die Gesamtdosierung beträgt 80 kg/h.

Das Produkt wird als Schmelzestrang extrudiert, im Wasser abgekühlt, granuliert und getrocknet (110°C/2 h).

TPU-Reaktion:

Die TPU-Reaktion erfolgt kontinuierlich in einer Zweiwellenschneckenmaschine ZSK 120 der Fa. Werner/Pfleiderer. Die Gehäusetemperaturen der 13 Gehäuse liegen bei 160°C bis 220°C. Die Drehzahl der Schnecke ist auf 300 U/min eingestellt.

Das oben hergestellte ABS/Polyester-Diol-Gemisch wird in das erste Gehäuse dosiert. In das gleiche Gehäuse werden 114 Gew.-Teile Diphenylmethandiisocyanat (MDI-flüssig, 50°C) gegeben. In Gehäuse 3 dosiert man ein auf 190°C erhitztes Gemisch von 96,6 Gew.-Teilen Poly-butandiol-1,4-adipat (Molekulargewicht ca. 2250), 1,0 Gew.-Teile 2,2'-6,6'-Tetraisopropyldiphenylcarbodiimid, 1,75 Gew.-Teile Hexandiol und 10 ppm Tetrabutyltitanat sowie 35 Gew.-Teile Butandiol. In das erste Gehäuse werden zusätzlich 1,5 Gew.-Teile Bis-ethylenstearylamid gegeben. Die Gesamtdosierung beträgt 1200 kg/h.

Die TPU-ABS-Mischung wird als Schmelzestrang extrudiert, im Wasser abgekühlt und granuliert.

**Beispiel 2**

Es wird wie in Beispiel 1 gearbeitet. Anstelle des Poly-butandiol-1,4-adipat (Molekulargewicht ca. 2250) bei der Vormischung mit ABS wird Poly-butandiol-1,4-adipat (Molekulargewicht ca. 900) eingesetzt.

In die TPU-Reaktion werden statt 96,6 Gew.-Teile jetzt 91,5 Gew.-Teile Polybutandiol-1,4-adipat (Molekulargewicht ca. 2250) gegeben.

**Beispiel 3** (nicht erfindungsgemäßes Beispiel)

Es wird wie in Beispiel 1 gearbeitet. Die Vormischung des ABS mit Polybutandiol-1,4-adipat (Molekulargewicht ca. 2250) enfällt. Das ABS wird alleine in die Reaktion gegeben, die 3,4 Gew.-Teile Polyester werden zusätzlich in die Polyestermischung der TPU-Reaktion gegeben, so daß dort statt 96,6 Gew.-Teilen jetzt 100,0 Gew.-Teile Poly-butandiol-1,4-adipat (Molekulargewicht ca. 2250) dosiert werden.

Die wichtigsten Eigenschaften der in den Beispielen hergestellten Produkte sind in der Tabelle 1 zusammengestellt.

Tabelle 1

| Bsp. | ABS | | | TPU-ABS | | | | | | |
| --- | --- | --- | --- | --- | --- | --- | --- | --- | --- | --- |
| | MVR ISO 1133 | | | Härte DIN 53505 | MVR ISO 11 33 | | | | Schlagzug (-20°C) DIN 53488 Dehnung % | Bruchspannung DIN 53504 MPa |
| | 190°C | 200°C | 210°C | Shore D | 205°C | 210°C | 215°C | 220°C | | |
| 1 | 30,8 | 51,0 | 80,8 | 59 | 3,4 | 21,3 | 47,4 | 92 | 36 | 58,8 |
| 2 | 34,5 | 56,0 | 90,3 | 58 | 4,5 | 23,1 | 46,2 | 93 | 45 | 63,8 |
| 3 | 2,3 | 4,7 | 8,8 | 59 | n.m. | 17,7 | 59,3 | 148 | 29 | 57,2 |
| n.m. = nicht meßbar | | | | | | | | | | |

Man erkennt deutlich, daß im Vergleich zu einem Standard-Verfahren bei der erfindungsgemäßen Arbeitsweise durch den Einsatz des Fließverbesserers die Aufschmelztemperaturen des Copolymerisates deutlich herabgesetzt werden. Dieses führt zu einer besseren Dispergierung des Copolymerisates im TPU.

Als Ergebnis erhält man beim TPU-ABS-Gemisch niedrigere Aufschmelztemperaturen bei gleichzeitig verbreitertem Schmelze-Verarbeitungsbereich. Hinzu kommen verbesserte Kälteeigenschaften.

**Patentansprüche**

1. Verfahren zur kontinuierlichen Herstellung einer TPU/Copolymerisat-Mischung, indem man

    I) 1 bis 60 Gew.-%, bezogen auf die Gesamt-Mischung, eines thermoplastischen (Co)polymerisats, welches 1 bis 30 Gew.-%, bezogen auf das thermoplastische (Co)polymerisat, eines Fließverbesserers enthält, und

    II) die polyurethanbildenden Komponenten

        A) organisches Diisocyanat
        B) lineares hydroxylterminiertes Polyol mit Molekulargewicht von 500 bis 5000
        C) Diol- oder Diamin-Kettenverlängerer mit Molekulargewicht von 60 bis 500

    einzeln oder gemischt über eine oder mehrere Einspeisestellen in einen Extruder einbringt, wobei das Molverhältnis der NCO-Gruppen in A) zu den gegenüber NCO-reaktiven Gruppen in B) und C) 0,9 bis 1,2 ist, und nach Abschluß der Polyurethanbildung die TPU/Polymerisatmischung aus dem Extruder austrägt.

2. Verfahren nach Anspruch 1, wobei man als Copolymerisat ABS in einer Menge von 3 bis 25 Gew.-%, bezogen auf die Gesamtmischung, verwendet.

3. Verfahren nach Anspruch 1, wobei man als Fließverbesserer einen Teil des Polyols B) verwendet.

4. Verfahren nach Anspruch 1, wobei man als Fließverbesserer ein PolyesterDiol mit Molekulargewicht 800 bis 4000 verwendet.

**Claims**

1. A process for the continuous production of a TPU/copolymer mixture, in which

    I) 1 to 60 % by weight, with respect to the total mixture, of a thermoplastic (co)polymer which contains 1 to 30 % by weight of a flow enhancer with respect to the thermoplastic (co)polymer, and

    II) polyurethane-forming components comprising

        A) an organic diisocyanate
        B) a linear polyol with a terminal hydroxyl group and with a molecular weight of 500 to 5000
        C) a diol- or diamine chain extender with a molecular weight of 60 to 500,

    are introduced, individually or in admixture, via one or more feed points into an extruder, wherein the molar ratio of the NCO groups in A) to the groups in B) and C) which react with NCO is 0.9 to 1.2, and after the formation of the polyurethane is complete the TPU/polymer mixture is discharged from the extruder.

2. A process according to claim 1, wherein ABS in an amount of 3 to 25 % by weight, with respect to the total mixture, is used as a copolymer.

3. A process according to claim 1, wherein part of polyol B) is used as a flow enhancer.

4. A process according to claims 1 or 4, wherein a polyester diol with a molecular weight of 800 to 4000 is used as a flow enhancer.

**Revendications**

1. Procédé pour la préparation continue d'un mélange polyuréthanne thermoplastique/copolymère dans lequel on introduit dans une extrudeuse, isolément ou à l'état de mélange, par un ou plusieurs endroits d'alimentation

   I) 1 à 60 % en poids, par rapport au mélange total, d'un (co)polymère thermoplastique contenant 1 à 30 % de son poids d'un agent fluidifiant, et
   II) les composants de formation d'un polyuréthanne

   A) un diisocyanate organique
   B) un polyol linéaire à groupes terminaux hydroxy de poids moléculaire 500 à 5000
   C) des agents d'allongement des chaînes du type diol ou diamine de poids moléculaire 60 à 500,

   avec un rapport molaire de 0,9 à 1,2 entre les groupes NCO de A) et les groupes réactifs avec les groupes NCO de B) et C), et, après formation du polyuréthanne, on évacue le mélange polyuréthanne thermoplastique/polymère de l'extrudeuse.

2. Procédé selon la revendication 1, dans lequel on utilise en tant que copolymère un polymère ABS en quantité de 3 à 25 % du poids du mélange total.

3. Procédé selon la revendication 1, dans lequel on utilise en tant qu'agent fluidifiant une partie du polyol B).

4. Procédé selon la revendication 1, dans lequel on utilise en tant qu'agent fluidifiant un polyester-diol de poids moléculaire 800 à 4000.